# EUROPÄISCHE PATENTSCHRIFT

(11) **EP 1 372 999 B1**
(45) Veröffentlichungstag und Bekanntmachung des Hinweises auf die Patenterteilung: **21.02.2007**
(21) Anmeldenummer: 02729837.1
(22) Anmeldetag: 02.04.2002
(51) Int. Cl.: B60J 5/06, E05D 15/10

(54) **SCHIEBETÜRFÜHRUNG MIT LAUFWAGEN UND LAUFSCHIENE BEI KRAFTFAHRZEUGEN**
SLIDING DOOR GUIDE WITH CARRIAGES AND RUNNING RAILS ON MOTOR VEHICLES
GUIDE DE PORTE COULISSANTE COMPORTANT UN CHARIOT ET UN RAIL DESTINE A DES VEHICULES

(30) Priorität: 05.04.2001 DE 20106046 U
(43) Veröffentlichungstag der Anmeldung: 02.01.2004
(73) Patentinhaber: Invenio GmbH Engineering Services, 65428 Rüsselsheim (DE)
(72) Erfinder: BATINLI, Bahatni, 71640 Ludwigsburg (DE); DOUBRAVINE, Alexandre, 71067 Sindelfingen (DE); RUDOLF, Horst, 73765 Neuhausen/Fildern (DE); RUIGROK VAN DE WERVE, Klaus, 71032 Böblingen (DE); SCHÄFER, Bernd, 71034 Böblingen (DE); SCHLEDOVITZ, Eduard, 70191 Stuttgart (DE)
(74) Vertreter: Rach, Werner
(86) Internationale Anmeldenummer: PCT/DE2002/001180
(87) Internationale Veröffentlichungsnummer: WO 2002/081244

(56) Entgegenhaltungen:
- FR-A- 2 813 243
- US-A- 4 464 863
- US-B1- 6 183 039
- PATENT ABSTRACTS OF JAPAN vol. 2000, no. 04, 31. August 2000 (2000-08-31) & JP 2000 016086 A (CENTRAL MOTOR CO LTD), 18. Januar 2000 (2000-01-18)

## Beschreibung

Die Erfindung betrifft ein Kraftfahrzeug, umfassend eine Schiebetürführung, insbesondere im Van- und Nutzfahrzeugbereich, mit Laufwagen und Laufschiene gemäß der im Oberbegriff des Anspruchs 1 definierten Gattung.

Bekannt und auf dem Markt befindlich sind Kraftfahrzeuge mit Schiebetürführungen, insbesondere im Van- und Nutzfahrzeugbereich, mit Laufwagen und Laufschiene, wobei die Tür mittels einer oberen, einer unteren und einer mittleren Führung gehalten ist. Dabei fluchtet die Tür in geschlossenem Zustand mit der Seitenwand des Fahrzeugs und im offenen Zustand steht sie über die Seitenwand des Fahrzeugs seitlich hinaus. Beim Öffnen und Schließen wird die Tür im wesentlichen parallel zur Seitenwand verschoben.

Bei derartigen bekannten Schiebetürführungen ist auf der Außenseite der Seitenwand des Kraftfahrzeuges, zu der die Tür hin verschoben wird, im allgemeinen mittig eine Lauf- und Führungsschiene angebracht. Weitere Führungsschienen sind in der Türöffnung unten und oben vorgesehen. Dadurch wird die Tür oben, unten und im mittleren Bereich gehalten.

Die Druckschrift US-A-4,464,863 offenbart eine Schiebetürführung bei Kraftfahrzeugen, die die Merkmale des Oberbegriffs von Anspruch 1 zeigt.

Nachteilig bei dieser weit verbreiteten Befestigungs- und Führungsart ist insbesondere, dass auf der Außenseite des Fahrzeugs die Laufschiene für die mittlere Führung angeordnet sein muss. Dies beeinträchtigt Design und Optik des Fahrzeugs ganz erheblich und erfordert außerdem wegen des unmittelbaren Einflusses der Witterung auf die Laufschiene ein besonders teures Material für diese. Meist wird nicht rostender Stahl verwandt.

Aufgabe vorliegender Erfindung ist es, die bekannte Schiebetürführung bei Kraftfahrzeugen so zu gestalten, dass die teure, optisch störende äußere Laufschiene entfällt.

### Vorteile der Erfindung

Das erfindungsgemäße Kraftfahrzeug, umfassend eine Schiebetürführung mit Laufwagen und Laufschiene mit den kennzeichnenden Merkmalen des Anspruchs 1 löst diese Aufgabe in vorteilhafter Weise. Gegenüber dem Stand der Technik hat die erfindungsgemäße Schiebetürführung den wesentlichen Vorteil, daß die äußere Laufschiene für die mittlere Führung entfällt. Daraus ergeben sich eine Fülle von neuen Design-Möglichkeiten für die Gestaltung von Kraftfahrzeugen mit Schiebetüren, und dies nicht nur im Bereich von Vans und Nutzfahrzeugen. Zu solchen Vorteilen gehören unter anderem:

Besseres Aufnehmen der hohen kinetischen Energie; erheblich besseres Design bzw. Möglichkeiten dazu in der Beplankung des Fahrzeugs; hohe Mißbrauchskräfte werden aufgefangen, ohne hohe Betätigungskräfte zur Folge zu haben;

die Kosten sind kleiner oder gleich als bei der herkömmlichen Lösung, beispielsweise entfällt die heute oft verwendete aufwendige Abdeckung der äußeren Laufschiene und die Laufschiene kann aus weniger teurem Material gefertigt werden;

durch die Anbringung der Laufschiene auf der Innenseite der Tür bildet sie einen Beitrag zum Seitenaufprallschutz; die beiden Seitenwände eines Fahrzeugs sind im wesentlichen gleich.

Gemäß der Erfindung wird dies prinzipiell dadurch erreicht, dass eine Laufschiene auf der Innenseite der Tür als mittlere Führung vorgesehen ist, der Laufwagen an einem Umlenkhebel schwenkbar angebracht ist, der Umlenkhebel seinerseits an einer Säule der Karosserie schwenkbar befestigt ist, etwa in halber Öffnungslänge in der Seitenwand ein zweites Verankerungsteil vorgesehen ist, welches mit dem ersten Verankerungsteil bei Erreichen der entsprechenden Öffnungsposition selbsttätig eine mechanische Kopplung bzw. Fixierung eingeht, womit am Ort des zweiten Verankerungsteils ein weiterer Fixpunkt für die Führung der Tür gebildet ist.

Durch die in den weiteren Ansprüchen niedergelegten Merkmale sind vorteilhafte Weiterbildungen und Verbesserungen der im Anspruch 1 angegebenen Schiebetürführung möglich.

Entsprechend einer vorteilhaften Ausgestaltung der erfindungsgemäßen Schiebetürführung ist vorgesehen, dass als zweites Verankerungsteil ein aus der Seitenwand herausstehender Bock vorgesehen ist und als erstes Verankerungsteil die auf der Innenseite der Tür vorgesehene Laufschiene dient, welche am Ort des herausstehenden Bocks zusammen mit diesen umgreifend formschlüssig mit diesem den weiteren Fixpunkt für die Führung der Tür bildet. Diese Ausführungsform ist in ihrer Gestaltung die einfachste, weist jedoch den aus der Seitenwand hervorstehenden Bock auf, was als störend empfunden werden kann. Dieser Bock hat vorzugsweise in etwa die Form einer Rolle oder trägt am äußeren Ende eine in die Laufschiene passende Rolle.

In weiterer vorteilhafter Ausgestaltung der erfindungsgemäßen Schiebetürführung ist als zweites Verankerungsteil eine Rolle oder ein mehrere Rollen umfassender Rollwagen vorgesehen ist, der fest an der Seitenwand oder aus dieser herausfahr- oder herausschwenkbar angeordnet ist und vorgesehen dass als erstes Verankerungsteil die auf der Innenseite der Tür vorgesehene Laufschiene dient, welche am Ort der Rolle oder des mehrere Rollen umfassender Rollwagens diese bzw. diesen umgreifend formschlüssig mit dieser bzw. diesem den weiteren Fixpunkt für die Führung der Tür bildet. Diese Ausgestaltungsform hat den besonderen Vorteil, dass bei der herausfahr- oder herausschwenkbaren Version von Rolle bzw. Rollwagen bei geschlossener Tür eine bis auf die kleine verschließbare Öffnung zum Herausfahren oder Herausschwenken von Rolle bzw. Rollwagen nicht unterbrochene Seitenwand geschaffen ist, welche designmäßig frei gestaltet werden kann.

In weiterer vorteilhafter Ausgestaltung ist entsprechend einem besonders vorteilhaften Ausführungsbeispiel der grundsätzlichen Lösung gemäß der Erfindung vorgesehen, dass als erstes Verankerungsteil ein aus der Seitenwand herausfahrbarer Fangbolzen vorgesehen ist und dass als zweites Verankerungsteil eine Rollenanordnung als tote Rolle vorgesehen ist, die in der Laufschiene freilaufend angeordnet ist, welche bei Erreichen der entsprechenden Öffnungsposition selbsttätig mit dem Fangbolzen eine mechanische Kopplung bzw. Fixierung eingeht, womit am Ort des Fangbolzens der weitere Fixpunkt für die Führung der Tür gebildet ist.

In weiterer vorteilhafter Ausgestaltung dieses Ausführungsbeispieles ist der Fangbolzen in eingefahrener Position durch eine Klappe verdeckt, welche beim Herausfahren des Fangbolzens aus der Abdeckposition bringbar ist. Dieselbe Art der Abdeckung ist auch bei der herausfahrbaren Rolle bzw. dem herausschwenkbaren Rollenwagen möglich. In weiter vorteilhafter Ausgestaltung ist der Fangbolzen mit einer Kappe versehen, die einerseits in eingefahrener Position mit der Seitenwand insbesondere dichtend abschließt und andererseits in ausgefahrener Position in einer entsprechenden Ausbuchtung der Laufschiene insbesondere berührungsfrei aufgenommen ist. Damit ist eine besonders elegante und die Seitenwand nicht unterbrechende Lösung zur Verfügung gestellt.

Entsprechend einem weiteren vorteilhaften Ausgestaltung des Ausführungsbeispiels der erfindungsgemäßen Schiebetürführung mit der Rolle oder mit dem mehrere Rollen umfassenden Rollwagen oder mit dem Fangbolzen ist eine Zwangssteuerung vorgesehen, mit deren Hilfe diese Elemente aus der Seitenwand herausfahrbar und in die Seitenwand wieder einfahrbar sind, und es ist vorgesehen, dass die Zwangssteuerung mit Umschwenken des Umlenkhebels aus der geschlossenen in die ausgeschwenkte Position oder umgekehrt aktiviert wird.

In weiterer vorteilhafter Ausbildung der erfindungsgemäßen Schiebetürführung ist der bei allen Ausführungsbeispielen vorgesehen, dass der Umlenkhebel federbelastet ist und die Federbelastung durch eine Feder, insbesondere eine Torsionsfeder, aufgebracht wird, die beim Ausschwenken der Tür entspannt und beim Einschwenken gespannt wird.

In vorteilhafter Ausgestaltung der Ausführungsbeispiele mit den ausfahr- bzw. -schwenkbaren Elementen ist vorgesehen, dass für die Zwangssteuerung des Fangbolzens bzw. der Rolle oder des mehrere Rollen umfassenden Rollwagens ein Seil oder ein Bowdenzug oder ein Schubstangenantrieb, die direkt oder indirekt mit dem Umlenkhebel verbunden sind, vorgesehen ist. In weiterer Ausgestaltung kann dafür auch eine Hebel-Kulisen-Verbindung vorgesehen sein, die vom Umlenkhebel betätigbar ist oder die Zwangssteuerung kann durch einen Zahnantrieb zwischen Umlenkhebel und Fangbolzen bzw. der Rolle oder des mehrere Rollen umfassenden Rollwagens realisiert sein. Eine weitere vorteilhafte Realisierungsmöglichkeit besteht darin, dass für die Zwangssteuerung des Fangbolzens bzw. der Rolle oder des mehrere Rollen umfassenden Rollwagensdieser bzw. diese um eine horizontale oder vertikale Achse schwenkbar angeordnet ist und die Schwenkung durch einen Betätigungsnocken eingeleitet wird, wenn die Schiebetür diese überfährt. In Beschreibung und Ansprüchen sind weitere vorteilhafte Möglichkeiten niedergelegt.

In einer weiteren vorteilhaften Ausführungungsform der erfindungsgemäßen Schiebetürführung ist vorgesehen, dass am Umlenkhebel ein verlängerter Laufwagen schwenkbar und dass als erstes Verankerungsteil ein Arretierhebel schwenkbar am verlängerten Laufwagen angebracht ist oder dass ein verlängerter Umlenkhebel mit festem Arretierhebel vorgesehen ist und dass als erstes Verankerungsteil ein Arretierhebel fest am Laufwagen vorgesehen ist, dass als zweites Verankerungsteil eine Vertiefung/Öffnung in der Seitenwand vorgesehen ist, in die der Arretierhebel bei Erreichen der entsprechenden Öffnungsposition selbsttätig einfallend eine mechanische Kopplung bzw. Fixierung eingeht, womit am Ort des zweiten Verankerungsteils ein weiterer Fixpunkt für die Führung der Tür gebildet ist. Bei dieser Ausführungsform kann die Tür mit einem relativ großen Aushub ausgeschwenkt werden und bereits dabei diejenige Öffnungsposition erreichen, in welcher der weitere Fixpunkt gebildet wird, bevor die eigentliche Schiebebewegung zum Öffnen bzw. weiteren Öffnen der Tür beginnt.

In einer dazu alternativen Ausführungsform ist in einer weiteren vorteilhaften Ausgestaltung der Erfindung vorgesehen, dass am Umlenkhebel ein verlängerter Laufwagen in einem Langloch schwenkbar geführt angebracht ist, dass als erstes Verankerungsteil ein Arretierhebel schwenkbar am Laufwagen vorgesehen ist, dass als zweites Verankerungsteil eine Vertiefung/Öffnung in der Seitenwand vorgesehen ist, in die der Arretierhebel bei Erreichen der entsprechenden Öffnungsposition selbsttätig einfallend eine mechanische Kopplung bzw. Fixierung eingeht, womit am Ort des zweiten Verankerungsteils ein weiterer Fixpunkt für die Führung der Tür gebildet ist. Mit dieser Ausführungsform wird eine geringere Aushubbewegung erreicht und am Ende des durch das Langloch gegebenen Verschiebewegs wird der weitere Fixpunkt gebildet. Diese beiden Ausführungsformen bedingen jeweils nur eine relativ kleine Vertiefung bzw. Öffnung in der Seitenwand, jedoch dort keine aktiven Elemente. Alle wesentlichen Teile sind in der Tür eingebaut und es sind keine Federn nötig. Eine Zwangssteuerung ist nicht erforderlich.

### Zeichnung

Die Erfindung ist anhand mehrerer in der Zeichnung dargestellter Ausführungsbeispiele der erfindungsgemäß gestalteten Schiebetürführung in der nachfolgenden Beschreibung näher erläutert. Dabei zeigen die einzelnen Figuren:
- Fig. 1: in perspektivischer Ansicht schematisch eine erste Ausführungsform der Erfindung, wobei in der Seitenwand ein herausfahrbarer Fangbolzen vorgesehen ist, mit geschlossener Tür;
- Fig. 2: in Draufsicht die Ausführungsform gemäß Fig. 1;
- Fig. 3: in perspektivischer Ansicht schematisch eine erste Ausführungsform der Erfindung, wobei in der Seitenwand ein herausfahrbarer Fangbolzen vorgesehen ist, mit in etwa halb geöffneter Tür und hergestelltem weiteren Fixpunkt;
- Fig. 4: in Draufsicht die Ausführungsform gemäß Fig. 3 mit etwa zur Hälfte geöffneter Tür;
- Fig. 5: in perspektivischer Ansicht den in der Ausführungsform gemäß Fig. 1 dargestellten freilaufenden Rollwagen in zwei verschieden Positionen, zum einen nicht mechanisch verbunden, zum anderen mechanisch verbunden mit dem ausgefahrenen Fangbolzen;
- Fig. 6: in Draufsicht schematisch die Anordnung von Tür und Seitenwand mit einem feststehenden Bock als zweites Verankerungsteil;
- Fig. 7: in Draufsicht schematisch die Anordnung von Tür und Seitenwand mit einer herausfahrbaren Rolle als zweites Verankerungsteil und einem Seil zwischen ihm und dem Umlenkhebel als Zwangssteuerung zum Herausfahren bzw. Einziehen der Rolle;
- Fig. 8: in Draufsicht schematisch die Anordnung von Tür und Seitenwand mit einer herausfahrbaren Rolle als zweites Verankerungsteil und einem Bowdenzug zwischen ihm und dem Umlenkhebel als Zwangssteuerung zum Herausfahren bzw. Einziehen der Rolle;
- Fig. 9: in Draufsicht schematisch die Anordnung von Tür und Seitenwand mit einer herausfahrbaren Rolle als zweites Verankerungsteil und einer Schubstange zwischen ihm und dem Umlenkhebel als Zwangssteuerung zum Herausfahren bzw. Einziehen der Rolle;
- Fig. 10: in Draufsicht schematisch die Anordnung von Tür und Seitenwand mit einer herausfahrbaren Rolle als zweites Verankerungsteil und einem entkoppelten Schubstangenantrieb zwischen ihm und dem Umlenkhebel als Zwangssteuerung zum Herausfahren bzw. Einziehen der Rolle, wobei der Schubstangenantrieb in zwei Versionen dargestellt ist;
- Fig. 11: in Draufsicht schematisch die Anordnung von Tür und Seitenwand mit einer herausfahrbaren Rolle als zweitem Verankerungsteil und einer Kulissenführung mit Balkenarm zwischen ihm und dem Umlenkhebel als Zwangssteuerung zum Herausfahren bzw. Einziehen der Rolle;
- Fig. 12: in Draufsicht schematisch die Anordnung von Tür und Seitenwand mit einer herausfahrbaren Rolle als zweitem Verankerungsteil und einer weiteren Kulissenführung mit Betätigungsarm zwischen ihm und dem Umlenkhebel als Zwangssteuerung zum Herausfahren bzw. Einziehen der Rolle und einer Schiebeführung;
- Fig. 13: in Draufsicht schematisch die Anordnung von Tür und Seitenwand mit einer herausfahrbaren Rolle als zweites Verankerungsteil und einem horizontalen Schwenklager als Zwangssteuerung, um welches die Rolle zum Herausschwenken bzw. Einschwenken drehbar ist;
- Fig. 14: in Draufsicht schematisch die Anordnung von Tür und Seitenwand mit einer herausfahrbaren Rolle als zweites Verankerungsteil und einem Zahnantrieb zwischen ihm und dem Umlenkhebel als Zwangssteuerung zum Herausfahren bzw. Einziehen der Rolle;
- Fig. 15: in Draufsicht schematisch die Anordnung von Tür und Seitenwand mit einer herausfahrbaren Rolle als zweitem Verankerungsteil und einem Exzentertrieb zwischen ihr und dem Umlenkhebel als Zwangssteuerung zum Herausfahren bzw. Einziehen der Rolle;
- Fig. 16: in Draufsicht schematisch die Anordnung von Tür und Seitenwand mit einer herausfahrbaren Rolle als zweitem Verankerungsteil und einem Schloss, welches durch eine Stange zwischen ihr und dem Umlenkhebel als Zwangssteuerung zum Herausfahren bzw. Einziehen der Rolle vorgesehen ist;
- Fig. 17: in Draufsicht schematisch die Anordnung von Tür und Seitenwand mit einer herausfahrbaren Rolle als zweitem Verankerungsteil und einem federbelastetem Auslösehebel auf der Aussenseite der Seitenwand, der durch das Überfahren mittels der Tür zum Herausfahren bzw. Einziehen der federbelastetn Rolle ausgelöst wird;
- Fig. 18: in perspektivischer Ansicht, teilweise aufgebrochen, schematisch eine weitere Ausführungsform der Erfindung, wobei in der Seitenwand eine herausschwenkbare Rollevorgesehen ist, die über einen Nocken bei darüber fahrender Tür zum Schwenken betätigt wird;
- Fig. 19: in Draufsicht die Ausführungsform gemäß Fig. 18;
- Fig. 20: in perspektivischer Ansicht, teilweise aufgebrochen, schematisch die Ausführungsform gemäß Fig. 18, mit in etwa zur Hälfte geöffneter Tür und gekoppelten Verankerungsteilen;
- Fig. 21: in Draufsicht die Ausführungsform gemäß Fig. 20 mit teilweise geöffneter Tür und hergestelltem Fixpunkt
- Fig. 22 - 24: schematisch in perspektivischer Ansicht verschiedene Positionen der am Schwenken des Rollwagens beteiligten Bauteile von Tür und Seitenwand gemäß der Ausführungsform von Fig. 18 - 21;
- Fig. 25: schematisch in Draufsicht eine weitere Ausführungsform der Erfindung, bei welcher ein verlängerter Laufwagen mit Arretierhebel vorgesehen ist, welcher zum Bilden des weiteren Fixpunktes in eine Öffnung in der Seitenwand verankernd einfällt, und
- Fig. 26: schematisch in Draufsicht eine weitere Ausführungsform der Erfindung, bei welcher ein verlängerter, in einem Langloch geführten Laufwagen mit Arretierhebel vorgesehen ist, welcher zum Bilden des weiteren Fixpunktes in eine Öffnung in der Seitenwand verankernd einfällt.

### Beschreibung der Ausführungsbeispiele

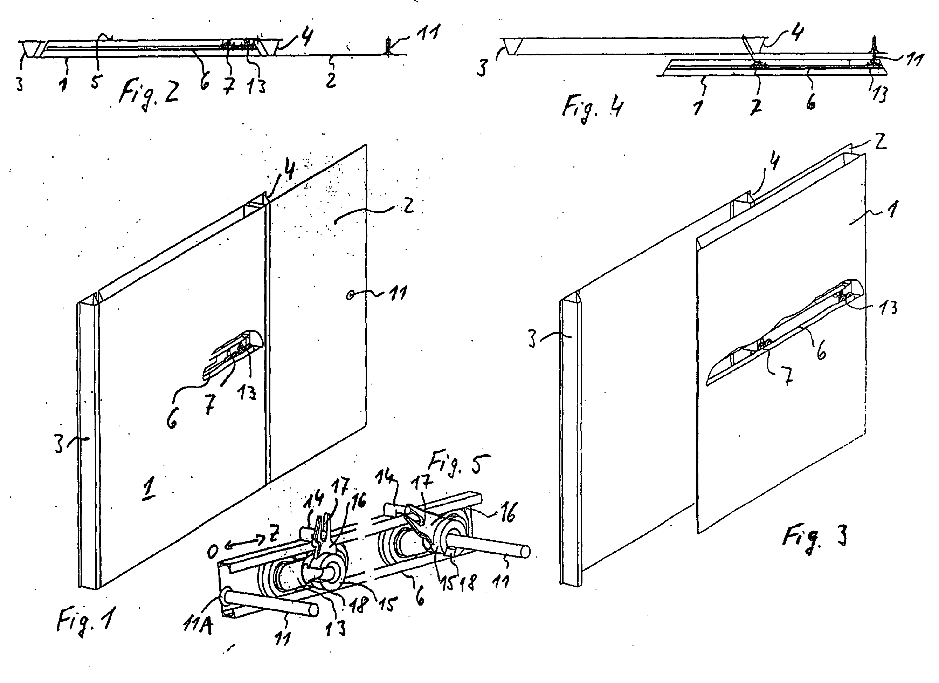

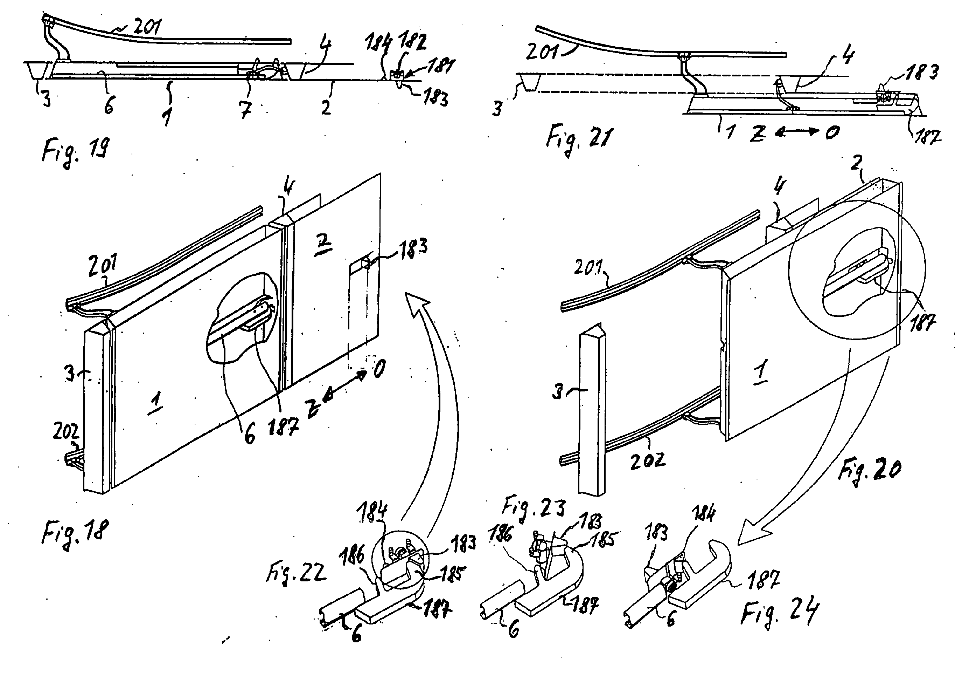

Anhand der Fig. 1 - 5 wird nachfolgend eine erste Ausführungsform, die gegebenenfalls als die bevorzugte bezeichnet werden kann, beschrieben. In Fig. 1 ist in perspektivischer Ansicht schematisch in der ersten Ausführungsform der Erfindung eine etwa halb geöffnete oder geschlossene Schiebetür 1 dargestellt sowie eine Seitenwand 2. Zwischen zwei Säulen 3 und 4, beispielsweise der Bund der C-Säule der Karosserie Nutzkraftfahrzeuges, verschließt die Tür 1 den dahinter liegenden Raum des Fahrzeugs. Auf der Innenseite 5 der Tür 1 ist erfindungsgemäß eine Laufschiene 6 angeordnet. In dieser Laufschiene 6 kann ein Laufwagen 7 rollen. Dieser Laufwagen 7 ist um eine Achse 8 schwenkbar an einem Umlenkhebel 9 befestigt. Der Umlenkhebel 9 ist seinerseits um eine Achse 10 schwenkbar an der Säule 4 befestigt. Die Tür 1 ist außer an der durch die Laufschiene 6 und den Laufwagen 7 gebildeten mittleren Führung auch an ihrem oberen Ende und an ihrem unteren Ende mittels Führungen zwischen den Säulen 3 und 4 gehalten. Diese obere und untere Führung ist in der schematischen Darstellung der Fig. 1 - 5 nicht gezeigt, sie sind jedoch in dem Ausführungsbeispiel gemäß Fig. 18 - 21 dargestellt.

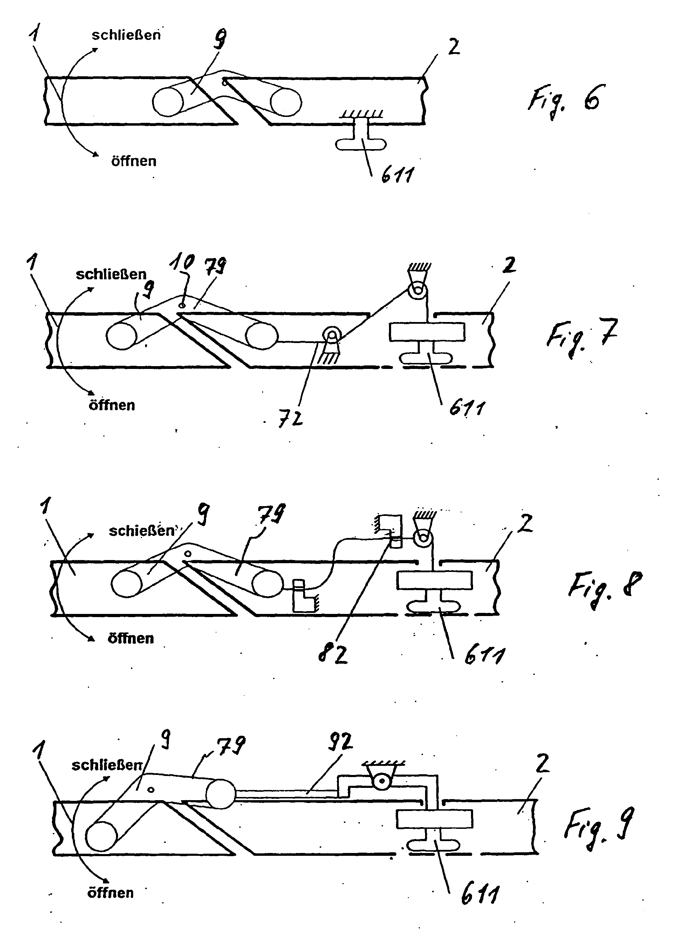

In der Seitenwand 2 ist erfindungsgemäß ein aus dieser herausfahrbarer Fangbolzen 11 als zweites Verankerungsteil vorgesehen und zwar in etwa in halber Öffnungslänge der Tür 1. Der Fangbolzen 11 kann mit einer Kappe 12 abgedeckt sein, welche die Seitenwand 2 vorzugsweise dichtend abschließt, wenn der Fangbolzen 11 in die Seitenwand 2 eingezogen ist. Dies ist immer dann der Fall, wenn die Tür 1 geschlossen ist. Wird die Tür 1 beim Öffnen entriegelt, die Verriegelung der Tür 1 ist nicht dargestellt, wird durch den unter Federdruck stehenden Umlenkhebel 9 die Tür 1 aus der in Fig. 1 und 2 gezeigten geschlossenen Stellung heraus ausgefahren in die in etwa in Fig. 3 und 4 dargestellte ausgestellte Position. Der Umlenkhebel 9 schwenkt gemäß dieser Ausführungsform dabei im Gegenuhrzeigersinn um etwas mehr als 90°. In Öffnungsrichtung O gesehen ist vor dem Laufwagen 7 ein erstes Verankerunsteil vorgesehen, welches gemäß dieser ersten Ausführungsform aus einer Rollenanodnung 13 besteht, die freilaufend in der Laufschiene 6 angeordnet ist. Durch einen Mitnehmerbolzen 14, siehe Fig. 5, wird die Rollenanordnung 13 bis zur Position des Fangbolzens 11 mitgenommen. Beim Erreichen der Position des Fangbolzens 11 als zweitem Verankerungsteil geht dieses mit dem ersten Verankerungsteil, nämlich hier dem Rollwagen 13 selbsttätig eine mechanische Kopplung ein, womit an diesem Ort des zweiten Verankerungsteils ein weiterer Fixpunkt für die Führung der Tür gebildet ist.

In Fig. 5 ist in perspektivischer Ansicht der in der Ausführungsform gemäß Fig. 1 - 4 dargestellte freilaufende Rollwagen 13 in zwei verschiedenen Positionen dargestellt. Die linke Position zeigt den Rollwagen 13 mechanisch nicht verbunden mit dem Fangbolzen 11. Die rechte Position zeigt den Rollwagen 13 in mechanisch verbundener Kopplung mit dem ausgefahrenen Fangbolzen 11. Am Rollwagen 13 ist ein geschlitzter Ring 15 schwenkbar angebracht, der seinerseits mit einem Gabelarm 16 fest verbunden ist. In der Gabel 17 des Gabelarms 16 ist der Mitnehmerbolzen 14, der an der Laufschiene 5 befestigt ist, geführt. Der Schlitz 18 des Ringes 15 und dessen Innendurchmesser sind so dimensioniert und in Bezug auf den Gabelarm 16 ausgerichtet, dass beim Öffnen der Tür 1 der Schlitz 18 auf den Fangbolzen 11 trifft. Beim weiteren Öffnen wird der Rollwagen 13 angehalten während die Laufschiene 5 sich mit dem Mitnehmerbolzen 14 weiterbewegt. Dadurch wird der Gabelarm 16 so verdreht, dass der daran fest angebrachte Ring 15 sich so dreht, dass in seinem Inneren der Fangbolzen 11 umschlossen wird. Der Fangbolzen 11 ist an seinem äußeren Ende verdickt, so dass die Tür 1 senkrecht zur Seitenwand 2 fixiert ist. Die rechte Position zeigt den Fangbolzen 11 vom Ring 15 umschlossen, so dass der Rollwagen 13 als erstes Verankerungsteil und der herausgefahrene Fangbolzen 11 als zweites Verankerungsteil miteinander verriegelt sind. Beim Schließen der Tür 1 fährt der Mitnehmerbolzen 14 automatisch in die Gabel 17 des Gabelarms 16 ein, verdreht diesen bis der Fangbolzen 11 frei ist und nimmt dann den Rollwagen 13 mit in die Schließstellung.

Anstelle des Rollwagens 13, der mit zwei Rollen ausgestattet ist, kann auch eine einzelne Rolle in Öffnungsrichtung O der Tür 1 gesehen vor dem Laufwagen 7 angeordnet sein, eine sogenannte tote Rolle. Auch diese stellt mit dem herausgefahrenen Fangbolzen 11 selbsttätig eine mechanische Kopplung her, um am Ort des Fangbolzens den weiteren Fixpunkt für die Tür zu bilden. Andere Fixpunkte für die Tür 1 sind die Verbindungen zu der oberen und der unteren Türführung gemäß Fig. 18 - 21. Diese Version der Erfindung mit der einzelnen freilaufenden toten Rolle ist in den Figuren nicht dargestellt.

In Fig. 6 ist in Draufsicht schematisch eine zweite Ausführungsform der Erfindung dargestellt. Bei dieser sehr einfach zu realisierender Anordnung ist in bzw. an der Seitenwand 2 ein feststehender Bock 611 als zweites Verankerungsteil vorgesehen. Dieser aus der Seitenwand 2 fest und ständig herausstehende Bock 611 hat an seinem äußeren Ende in etwa die Form einer Rolle oder kann dort sogar mit einer Rolle versehen sein. Bei dieser Ausführungsform ist weiterhin vorgesehen, dass als erstes Verankerungsteil die auf der Innenseite der Tür 1 vorgesehene Laufschiene 6, in Fig. 6 nicht dargestellt, dient, welche am Ort des herausstehenden Bocks 611 auf diesen aufläuft und dann diesen umgreifend in der weiteren Öffnungsbewegung formschlüssig mit diesem den weiteren Fixpunkt für die Führung der Tür 1 bildet. Beim Öffnen wird der Umlenkhebel 9 um die Achse 10 im Gegenuhrzeigersinn geschwenkt und der daran angelenkte Laufwagen 7 wird ebenfalls mit Laufschiene 6 und Tür 1 verschwenkt, so dass die Tür 1 ausgestellt und in etwa parallel vor der Seitenwand 2, wie in Fig. 2 dargestellt, positioniert ist. Bei der weiteren Öffnungsbewegung läuft die Laufschiene 6 auf den Bock 611 auf.

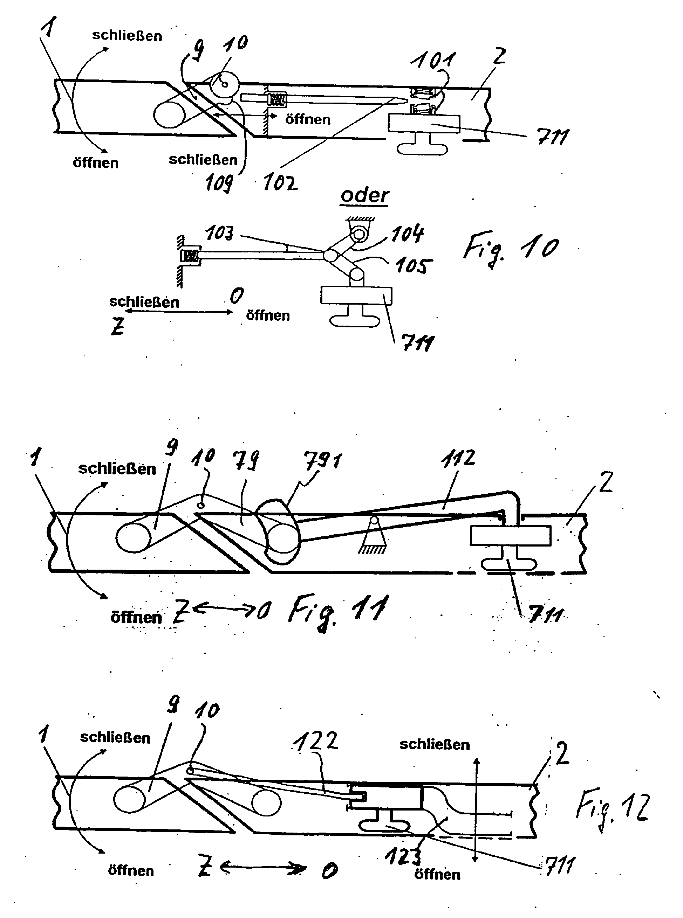

Gemäß einer dritten Ausführungsform der Erfindung kann an Stelle der in der Laufschiene 6 auf der Innenseite 5 der Tür 1 freilaufenden Rollenanordnung 13 bzw. der dieser entsprechenden toten Rolle eine derartige Rolle 711 bzw. ein mehrere Rollen umfassender Rollwagen vorgesehen sein, wie dies in der Darstellung von Fig. 7 schematisch gezeigt ist. Bei dieser Ausführungsform fungiert die Rolle 711 als zweites Verankerungsteil. Die in Fig. 7 dargestellte Rolle 711 bzw. ein mehrere Rollen umfassender Rollwagen kann entweder fest an der Seitenwand 2 befestigt sein oder, wie in Fig. 7 dargestellt, aus der Seitenwand 2 herausfahrbar angeordnet sein. Möglich ist es auch, diese Rolle 711 aus der Seitenwand 2 um eine senkrechte oder waagrechte Achse herausschwenkbar anzuordnen. Bei dieser Ausführungsform dient als erstes Verankerungsteil die auf der Innenseite der Tür vorgesehene Laufschiene 6, welche auf die ausgefahrene oder fest außen stehende Rolle 711 beim Öffnen aufläuft. Somit umgreift die Laufschiene 6 am Ort der Rolle 711 diese formschlüssig und bildet mit dieser den weiteren Fixpunkt für die Führung der Tür. Beim Öffnen wird der Umlenkhebel 9 um die Achse 10 im Gegenuhrzeigersinn geschwenkt und der daran angelenkte Laufwagen 7 wird ebenfalls mit Laufschiene 6 und Tür 1 verschwenkt, so dass die Tür 1 ausgestellt und in etwa parallel vor der Seitenwand 2, wie in Fig. 3 und 4 dargestellt, positioniert ist. Bei der weiteren Öffnungsbewegung läuft die Laufschiene 6 auf die Rolle 711 auf.

Bei der in Fig. 7 in Draufsicht schematisch gezeigten Ausführungsform ist in der Seitenwand 2 eine herausfahrbare Rolle 711 als zweites Verankerungsteil vorgesehen. Um sicher zu stellen, dass dieses zweite Verankerungsteil beim Öffnen der Tür 1 immer zuverlässig heraus gefahren wird und beim Schließen der Tür 1 und nach Lösen der Kopplung immer zuverlässig wieder in die Seitenwand 2 eingefahren wird, ist dafür eine Zwangssteuerung vorgesehen. Als ein Beispiel für die Zwangssteuerung ist diese entsprechend Fig. 7 durch ein zweckmäßig umgelenktes Seil 72 realisiert, wobei das Seil 72 einerseits an einem Umlenkgegenarm 79 des Umlenkhebels 9 und andererseits an der Rolle 711 befestigt ist.

Eine weitere Möglichkeit für die Zwangssteuerung des herausfahrbaren zweiten Verankerungsteils ist in Fig. 8 in Draufsicht schematisch mit einem Bowdenzug 82 dargestellt. Der Bowdenzug 82 ist einerseits an dem Umlenkgegenarm 79 des Umlenkhebels 9 und andererseits an der Rolle 711 befestigt. Die Anordnung des Bowdenzugs 82 ist derart getroffen, dass beim Öffnen der Tür 1 die Rolle 711 bzw. allgemein das herausfahrbare zweite Verankerungsteil, aus der Seitenwand 2 heraus gefahren wird und dass beim Schließen der Tür 1 und nach dem Freigeben der Kopplung zwischen den beiden Verankerungsteilen die herausgefahrene Rolle 711 als zweites Verankerungsteil wieder in die Seitenwand 2 eingefahren wird.

Fig. 9 zeigt in Draufsicht schematisch die Anordnung von Tür 1 und Seitenwand 2 mit einer herausfahrbaren Rolle 711 als zweites Verankerungsteil und einer Schubstange 92 zwischen ihm und dem Umlenkgegenarm 79 des Umlenkhebels 9 als Zwangssteuerung zum Herausfahren bzw. Einziehen der Rolle 711. Dabei ist die Schubstange 92 am Ende des Umlenkgegenarmes 79 einerseits angelenkt und andererseits über geeignete Umlenkungen an der Rolle 711 befestigt.

Die verschiedenen Zwangsteuerungen, die in den Fig. 7 bis 9 dargestellt sind, beinhalten jeweils eine direkte Verbindung zwischen Umlenkhebel 9 und Rolle 711 als einer möglichen Verwirklichung des aus der Seitenwand 2 herausfahrbaren zweiten Verankerungsteil.

Fig. 10 zeigt in Draufsicht schematisch die Anordnung von Tür 1 und Seitenwand 2 mit einer herausfahrbaren Rolle 711 als zweites Verankerungsteil und einen entkoppelten Schubstangenantrieb zwischen ihm und dem Umlenkhebel 9 als Zwangssteuerung zum Herausfahren bzw. Einziehen der Rolle 711, wobei der Schubstangenantrieb in zwei Versionen dargestellt ist. Am um die Achse 10 schwenkbaren Umlenkhebel 9 ist in der Nähe der Schwenkachse 10 eine Nase 109 vorgesehen, die auf das Ende einer federbelasteten Schubstange 102 einwirkt, wenn die Tür 1 in Richtung O geöffnet wird. Beim in Fig. 10 oben gezeigten Ausführungsbeispiel fährt das rechte Ende der Schubstange 102 bei der Verschiebung in Richtung O in eine Keilvorrichtung 101 ein und schiebt die Rolle 711 aus der Seitenwand 2 heraus. Bei dem in Fig. 10 unten gezeigten Ausführungsbeispiel ist das rechte Ende einer unter Federspannung stehenden Schubstange 103 mit zwei Gelenkarmen 102 und 105 verbunden. Der obere Gelenkarm 104 ist an seinem anderen Ende mit einem festen Teil in der Seitenwand 2 gelenkig verbunden. Der untere Gelenkarm 105 ist an seinem anderen Ende gelenkig mit der Rolle 711 verbunden. Beim Öffnen der Tür 1 in Richtung O wird durch Verschwenken des Umlenkhebels 9 durch dessen Nase 109 die Schubstange 102 nach rechts verschoben und dadurch werden die beiden Enden der Gelenkarme 104 und 105 auseinander bewegt und somit die Rolle 711 aus der Seitenwand 2 heraus gefahren. Beim Schließen der Tür 1 in Richtung Z und nach Entkopplung der beiden Verankerungsteile, hier Laufschiene 6 und Rolle 711, wird das linke Ende der Schubstange 102 bzw. 103 frei von der Nase 109 und durch Federkraft wird die Rolle 711 eingezogen und kehrt in ihre Ausgangsposition innerhalb der Seitenwand zurück.

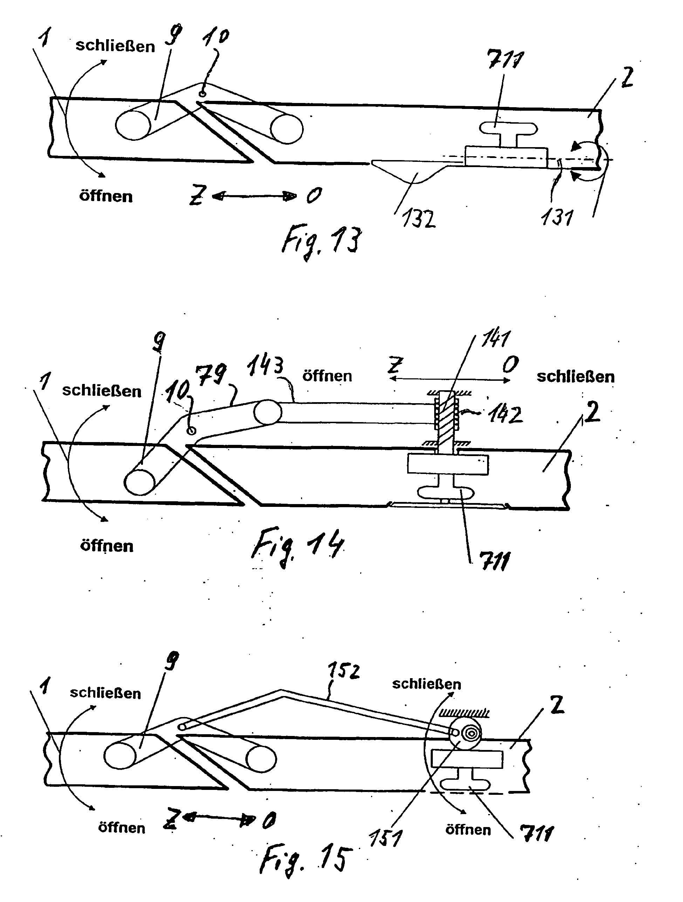

In Fig. 11 ist ein weiteres Ausführungsbeispiel für die Zwangssteuerung schematisch dargestellt. In der schematischen Draufsicht der Anordnung von Tür 1 und Seitenwand 2 mit herausfahrbarer Rolle 711 als zweitem Verankerungsteil ist eine Kulissenführung 791 am Ende des Umlenkgegenarmes 79 und ein damit gekoppelter Balkenarm 112 als Zwangssteuerung zum Herausfahren bzw. Einziehen der Rolle 711 vorgesehen, wobei am rechten Ende des Balkenarms 112 die Rolle 711 angelenkt ist.

In Fig. 12 ist ein weiteres Ausführungsbeispiel für die Zwangssteuerung schematisch dargestellt. In der schematischen Draufsicht der Anordnung von Tür 1 und Seitenwand 2 mit einer herausfahrbaren Rolle 711 als zweitem Verankerungsteil ist eine weitere Kulissenführung mit Betätigungsarm 122 zwischen ihr und dem Umlenkhebel 9 als Zwangssteuerung zum Herausfahren bzw. Einziehen der Rolle 711 zusammen mit einer Schiebeführung 123 vorgesehen.

Fig. 13 zeigt in Draufsicht schematisch die Anordnung von Tür 1 und Seitenwand 2 mit einem herausfahrbaren Rollwagen 711 als zweitem Verankerungsteil und ein weiteres Ausführungsbeispiel für die Zwangssteuerung. Um die Rolle 711 aus der Seitenwand 2 heraus zu schwenken bzw. in diese einzuschwenken, ist sie um ein horizontales Schwenklager mit einer Schwenkachse 131 drehbar angeordnet. Auf der Außenseite der schwenkbaren Rolle 711 bzw. der Seitenwand 2 ist eine Nocke 132 vorgesehen. Wird die Nocke 132 von der Tür beim Öffnen oder beim Schließen überfahren, wird die Rolle 711 in die gewünschte Richtung um die Schwenkachse 131 aus der Seitenwand 2 heraus- oder in diese hineingeschwenkt.

In Fig. 14 ist in Draufsicht schematisch die Anordnung von Tür 1 und Seitenwand 2 mit einer herausfahrbaren Rolle 711 als zweites Verankerungsteil und einem Zahnantrieb zwischen ihr und dem Umlenkhebel 9 bzw. seinem daran befindlichen Umlenkgegenarm 79 als Zwangssteuerung zum Herausfahren bzw. Einziehen der Rolle 711 dargestellt. Auf einem an der Rolle 711 drehbar befestigten Gewindestutzen 141 sitzt eine Gewindemuffe 142, die über eine Stange 143 bei der Umlenkung des Umlenkhebels 9 die Gewindemuffe 142 und damit auch den Gewindestutzen 141 dreht und die Rolle 711 somit aus der Seitenwand heraus- oder in sie hineindreht.

In Fig. 15 ist in Draufsicht schematisch die Anordnung von Tür 1 und Seitenwand 2 mit einer herausfahrbaren Rolle 711 als zweitem Verankerungsteil und einem Exzentertrieb 151 zwischen ihr und dem Umlenkhebel 9 als Zwangssteuerung zum Herausfahren bzw. Einziehen der Rolle 711 dargestellt. Über eine Antriebsstange 152 werden die Anschläge des Exzentertriebs 151 und die daran befestigte Rolle 711 in die jeweils passende ausgefahrene oder eingezogene Position gebracht.

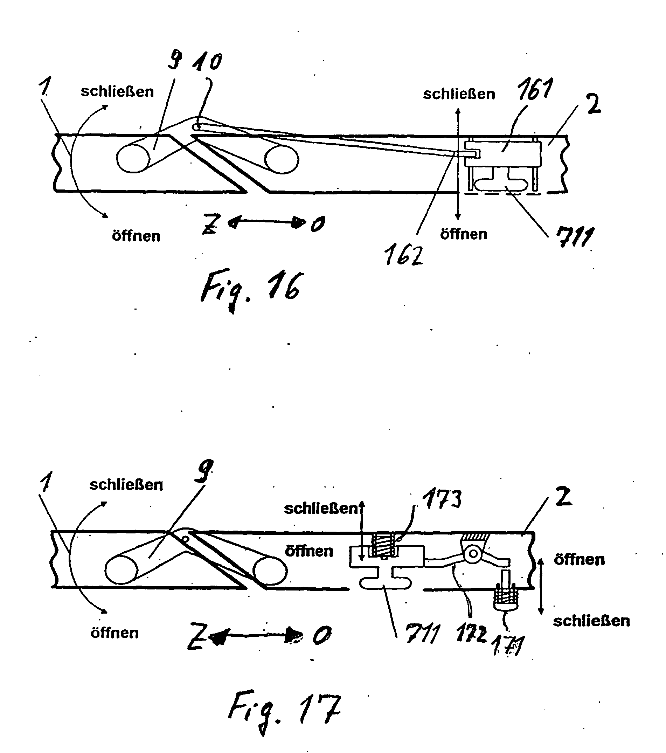

In Fig. 16 ist in Draufsicht schematisch die Anordnung von Tür 1 und Seitenwand 2 mit einer herausfahrbaren Rolle 711 als zweitem Verankerungsteil dargestellt, wobei ein Schloss 161, welches durch eine Stange 162 zwischen ihm und dem Umlenkhebel 9 vorgesehen ist und als Zwangssteuerung zum Herausfahren bzw. Einziehen der Rolle 711 dient.

In Fig. 17 ist in Draufsicht schematisch die Anordnung von Tür 1 und Seitenwand 2 mit einer herausfahrbaren Rolle 711 als zweitem Verankerungsteil dargestellt. Ein auf der Aussenseite der Seitenwand 2 vorgesehener federbelasteter Auslösehebel 171, löst beim Überfahren mittels der Tür 1 über einen Kipphebel 172 das Herausfahren bzw. Einziehen der durch eine Feder 173 senkrecht zur Seitenwand 2 belasteten Rolle 711 als Zwangssteuerung aus.

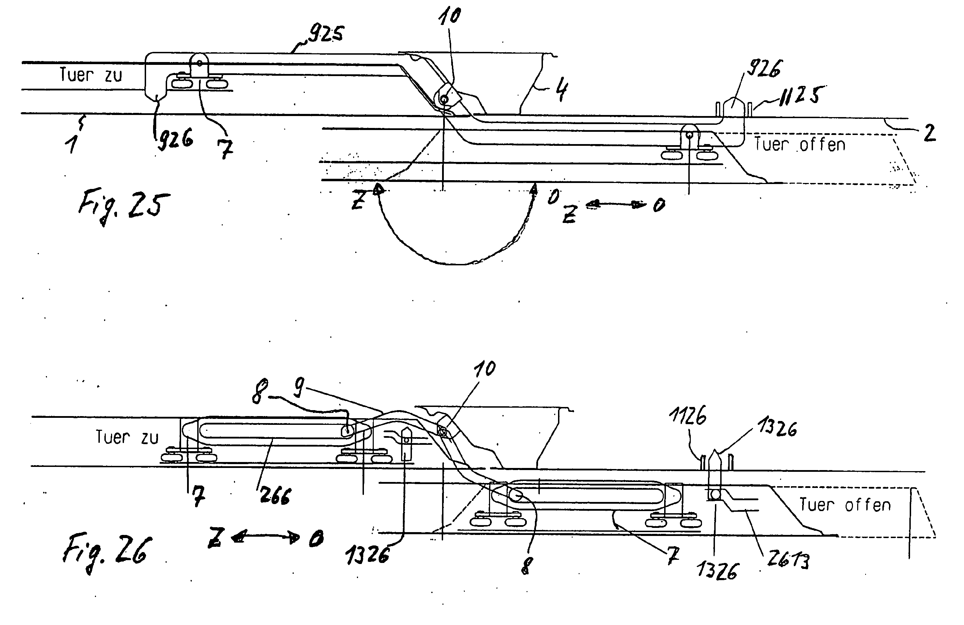

Anhand der Fig. 18 - 24 wird nachfolgend eine weitere Ausführungsform der Erfindung beschrieben. Diese ist in perspektivischer Ansicht, teilweise aufgebrochen, schematisch in den Fig. 18 und 20 dargestellt, wobei die Fig. 19 und 21 jeweils die Draufsicht auf die in Fig. 18 und 20 gezeigte Position der Tür 1 relativ zur Seitenwand 2 zeigt. Die Fig. 22 - 24 zeigen schematisch in perspektivischer Ansicht verschiedene Positionen der am Schwenken der Rolle beteiligten Bauteile von Tür 1 und Seitenwand 2 gemäß der Ausführungsform von Fig. 18 - 21. In den Fig. 18 und 20 sind eine obere Führungsschiene 201 und eine untere Führungsschiene 202 dargestellt, an denen die Tür 1 gehalten und geführt ist. Dies zusätzlich zur Führung durch die Laufschiene 6 und den darin geführten Laufwagen 7.

Bei dieser Ausführungsform ist in der Seitenwand 2 eine um eine senkrechte Achse 182 herausschwenkbare Rolle 181 vorgesehen ist, die über einen größeren Nocken 183 auf der Aussenseite der Seitenwand 2 bei darüber fahrender, sich in Richtung O öffnender Tür 1 zum Herausschwenken betätigt wird. Auf der Innenseite der schwenkbaren Anordnung 181 ist eine von der größeren Nocke 183 in Laufrichtung beabstandete kleinere Nocke 184 vorgesehen. An der Laufschiene 6 auf der Innenseite 5 der Tür 1 ist am in Öffnungsrichtung O gesehen vorderen Ende eine mit zwei Vorsprüngen 185 und 186 versehene Klaue 187 angeordnet. Der Abstand der Vorsprünge 185 und 186 in Laufrichtung entspricht in etwa dem Abstand der beiden Nocken 183 und 184 voneinander. Wird die Tür 1 in Richtung O geöffnet, kontaktiert zuerst der Vorsprung 185 der Klaue 187 den größeren Nocken 183 und dreht diesen um die senkrechte Schwenkachse 182. Dies ist in Fig. 22 dargestellt. Beim weiteren Laufen in Richtung O, dreht die Klaue 187 mit dem Vorsprung 185 den Nocken 183 weiter in die Seitenwand 2 hinein, wie dies in der Fig. 23 dargestellt ist. Bei dieser Drehung kommt die innere kleinere Nocke 184 nach außen zwischen die Vorsprünge 185 und 186 der Klaue 187. Bei weiterer Öffnung wird nunmehr durch den Nocken 184 die Rolle 181 ganz aus der Seitenwand 2 heraus gedreht, wie dies in Fig. 24 dargestellt ist. Dann kann die Rolle 181 als zweites Verankerungsteil in die Laufschiene 6 als erstem Verankerungsteil einfahren und bildet somit den weiteren Fixpunkt für die Führung der Tür 1. Entsprechend der verbleibenden Lauflänge wird die Tür 1 weiter über den Ort der Rolle 181 hinaus geöffnet. Beim Schließen wird die Rolle 181 in umgekehrter Reihenfolge von den auf die Nocken 184 und 183 treffenden Vorsprünge 186 und 185 der Klaue 187 wieder in die Seitenwand 2 hinein gedreht.

In Fig. 25 ist schematisch in Draufsicht eine weitere Ausführungsform der Erfindung dargestellt. Dabei ist der Laufwagen 7 an einem verlängertem Umlenkhebel 925 schwenkbar angelenkt. Am Ende des Umlenkhebels 925 ist senkrecht dazu, bei geschlosserer Tür 1, ein Arretierhebel 926 als erstes Verankerungsteil angebracht. In der Seitenwand 2 ist eine Öffnung oder Vertiefung 1125 vorgesehen, die als zweites Verankerungsteil dient. Beim Öffnen der Tür 1 durch eine Schwenk- bzw. Aushubbewegung von 180° um die Achse 10 des Umlenkhebels 925 herum, greift der Arretierhebel 926 in die entsprechend beabstandete Öffnung bzw. Vertiefung 1125 ein. Diese Position ist in der rechten Hälfte der Fig. 25 gezeigt. Nach dieser Schwenkung um 180° und der damit verbundenen Bildung des weiteren Fixpunktes für die Führung der Tür 1, kann diese weiter in Richtung O geöffnet werden. Eine dazu alternative, jedoch ind den Figuren nicht dargestellte Ausführungsform kann einen verlängerten Laufwagen mit Arretierhebel vorsehen, welcher zum Bilden des weiteren Fixpunktes in die Öffnung in der Seitenwand 2 verankernd einfällt.

In Fig. 26 ist schematisch in Draufsicht eine weitere Ausführungsform der Erfindung dargestellt. Bei dieser Form ist ein verlängerter Laufwagen 7, in dem ein Langloch 266 angebracht ist, vorgesehen. Im Langloch 266 ist die um die Achse 8 schwenkbare Anlenkung an den Umlenkhebel 9 angebracht. In Öffnungsrichtung O ist vor dem Laufwagen 7 ein Arretierhebel 1326 vorgesehen, welcher zum Bilden des weiteren Fixpunktes in eine Öffnung 1126 in der Seitenwand 2 verankernd einfällt, wenn die Tür 1 um die Achse 10 aufgeschwenkt wird und bis zur Position der Öffnung 1126 vorgeschoben wird, Dabei wird der Arretierhebel 1326 durch eine geeignete Führung 2613 in die Öffnung 1126 als zweitem Verankerungsteil zum Bilden des weiteren Fixpunktes eingefahren. In Fig. 26 ist links die Position bei geschlossener Tür 1 und rechts bei in etwa zur Hälfte geöffneter Tür 1 gezeigt. Entsprechend der verbleibenden Laufschienenlänge kann sie in Richtung O weiter geöffnet werden.

In vorteilhafter Weise schafft die Erfindung die Möglichkeit, die Schiebetürführung bei Kraftfahrzeugen eleganter, kostengünstiger und mit mehr Sicherheit zu gestalten.

## Patentansprüche

1. Kraftfahrzeug, umfassend eine Schiebetürführung, insbesondere im Van- und Nutzfahrzeugbereich, mit Laufwagen (7) und Laufschiene (6), wobei die Tür (1) in geschlossenem Zustand mit der Seitenwand (2) des Fahrzeugs fluchtet und im offenen Zustand über die Seitenwand (2) seitlich hinaussteht und im wesentlichen parallel zur Seitenwand (2) verschiebbar ist, **dadurch gekennzeichnet, dass** die Tür (1) mittels einer oberen, einer unteren und einer mittleren Führung gehalten ist, die Laufschiene (6) auf der Innenseite (5) der Tür (1) als mittlere Führung vorgesehen ist, der Laufwagen (7) an einem Umlenkhebel (9) schwenkbar angebracht ist, der Umlenkhebel (9) seinerseits an einer Säule (4) der Karosserie schwenkbar befestigt ist, ein erstes Verankerungsteil (6, 13) vorgesehen ist, etwa in halber Öffnungslänge in der Seitenwand (2) ein zweites Verankerungsteil (11, 611, 711, 1125, 1126) vorgesehen ist, welches mit dem ersten Verankerungsteil (6, 13) bei Erreichen der entsprechenden Öffnungsposition selbsttätig eine mechanische Kopplung bzw. Fixierung eingeht, womit am Ort des zweiten Verankerungsteils (11, 611, 711, 1125, 1126) ein weiterer Fixpunkt für die Führung der Tür (1) gebildet ist.

2. Kraftfahrzeug nach Anspruch 1, **dadurch gekennzeichnet, dass** als zweites Verankerungsteil ein aus der Seitenwand (2) herausstehender Bock (611) vorgesehen ist und als erstes Verankerungsteil die auf der Innenseite (5) der Tür (1) vorgesehene Laufschiene (6) dient, welche am Ort des herausstehenden Bocks (611) zusammen mit diesen umgreifend formschlüssig mit diesem den weiteren Fixpunkt für die Führung der Tür (1) bildet.

3. Kraftfahrzeug nach Anspruch 1, **dadurch gekennzeichnet, dass** als zweites Verankerungsteil eine Rolle (711) oder ein mehrere Rollen umfassender Rollwagen vorgesehen ist, der fest an der Seitenwand (2) oder aus dieser herausfahr- oder herausschwenkbar angeordnet ist und dass als erstes Verankerungsteil die auf der Innenseite (5) der Tür (1) vorgesehene Laufschiene (6) dient, welche am Ort der Rolle (711) oder des mehrere Rollen umfassender Rollwagens diese bzw. diesen umgreifend formschlüssig mit dieser bzw. diesem den weiteren Fixpunkt für die Führung der Tür (1) bildet.

4. Kraftfahrzeug nach Anspruch 1, **dadurch gekennzeichnet, dass** als erstes Verankerungsteil ein aus der Seitenwand (2) herausfahrbarer Fangbolzen (11), insbesondere mit verdicktem Kopfteil, vorgesehen ist und dass als zweites Verankerungsteil eine Rollenanordnung (13) oder eine einzelne sogenannte tote Rolle vorgesehen ist, die in der Laufschiene (6) freilaufend angeordnet ist, welche bei Erreichen der entsprechenden Öffnungsposition selbsttätig mit dem Fangbolzen (11) eine mechanische Kopplung bzw. Fixierung eingeht, womit am Ort des Fangbolzens (11) der weitere Fixpunkt für die Führung der Tür (1) gebildet ist.

5. Kraftfahrzeug nach Anspruch 3 oder 4, **dadurch gekennzeichnet, dass** die Rolle (711) oder der mehrere Rollen umfassende Rollwagen oder der Fangbolzen (11) durch eine Zwangssteuerung aus der Seitenwand (2) herausfahrbar und in die Seitenwand (2) wieder einfahrbar ist, und dass die Zwangssteuerung mit Umschwenken des Umlenkhebels (9) aus der geschlossenen in die ausgeschwenkte Position oder umgekehrt aktiviert wird.

6. Kraftfahrzeug nach Anspruch 4 oder 5, **dadurch gekennzeichnet, dass** der Fangbolzen (11) in eingefahrener Position durch eine Klappe verdeckt ist, und dass die Klappe beim Herausfahren des Fangbolzens (11) aus der Abdeckposition bringbar ist.

7. Kraftfahrzeug nach Anspruch 4 oder 6, **dadurch gekennzeichnet, dass** der Fangbolzen (11) mit einer Kappe (12) versehen ist, die einerseits in eingefahrener Position mit der Seitenwand (2) insbesondere dichtend abschließt und andererseits in ausgefahrener Position in einer entsprechenden Ausbuchtung der Laufschiene (6) bzw. der Rolle (711) insbesondere berührungsfrei aufgenommen ist.

8. Kraftfahrzeug nach einem der vorigen Ansprüche, **dadurch gekennzeichnet, dass** der Umlenkhebel (9) federbelastet ist und die Federbelastung durch eine Feder, insbesondere eine Torsionsfeder, aufgebracht wird, die beim Ausschwenken der Tür (1) entspannt und beim Einschwenken gespannt wird.

9. Kraftfahrzeug nach einem der Ansprüche 4 bis 7, **dadurch gekennzeichnet, dass** für die Zwangssteuerung des Fangbolzens (11) bzw. der Rolle (711) oder des mehrere Rollen umfassenden Rollwagens ein Seil (72) oder durch einen Bowdenzug (82) oder durch eine Schubstange (102, 103), die direkt oder indirekt mit dem Umlenkhebel (9, 79) verbunden sind, vorgesehen ist.

10. Kraftfahrzeug nach einem der Ansprüche 4 bis 7, **dadurch gekennzeichnet, dass** für die Zwangssteuerung des Fangbolzens (11) bzw. der Rolle (711) oder des mehrere Rollen umfassenden Rollwagens eine Hebel-Kulisen-Verbindung (112, 791; 122, 123) oder eine Exzenterverstellung (151, 152) vorgesehen ist, die vom Umlenkhebel (9) betätigbar ist.

11. Kraftfahrzeug nach einem der Ansprüche 4 bis 7, **dadurch gekennzeichnet, dass** die Zwangssteuerung des Fangbolzens (11) bzw. der Rolle (711) oder des mehrere Rollen umfassenden Rollwagens durch einen Zahnantrieb (141, 142, 143) zwischen Umlenkhebel (9, 79) und Fangbolzen (11) bzw. Rolle (711) realisiert ist.

12. Kraftfahrzeug nach einem der Ansprüche 4 bis 7, **dadurch gekennzeichnet, dass** für die Zwangssteuerung des Fangbolzens (11) bzw. der Rolle (711) oder des mehrere Rollen umfassenden Rollwagens dieser bzw. diese um eine horizontale (131) oder vertikale (182) Achse schwenkbar angeordnet ist und die Schwenkung durch einen Betätigungsnocken (132; 183, 184) eingeleitet wird, wenn die Schiebetür (1) diesen überfährt.

13. Kraftfahrzeug nach einem der Ansprüche 4 bis 7, **dadurch gekennzeichnet, dass** für die Zwangssteuerung des Fangbolzens (11) bzw. der Rolle (711) oder des mehrere Rollen umfassenden Rollwagens ein federbelaster Auslösehebel (171) auf der Aussenseite der Seitenwand (2) vorgesehen ist, die über einen Kipphebel (172) beim Überfahren durch die Tür (1) das Herausfahren bzw. das Einziehen steuert.

14. Kraftfahrzeug nach Anspruch 1, **dadurch gekennzeichnet, dass** am Umlenkhebel (9) der Laufwagen (7) schwenkbar und dass als erstes Verankerungsteil ein Arretierhebel (926) schwenkbar am Laufwagen (7) angebracht ist oder dass der Umlenkhebel (9, 925) mit einem senkrecht abstehenden festen Arretierhebel (926) vorgesehen ist, und dass als zweites Verankerungsteil eine Vertiefung oder Öffnung (1125) in der Seitenwand (2) vorgesehen ist, in die der Arretierhebel (926) bei Erreichen der entsprechenden Öffnungsposition selbsttätig einfallend eine mechanische Kopplung bzw. Fixierung eingeht, womit am Ort des zweiten Verankerungsteils der weitere Fixpunkt für die Führung der Tür (1) gebildet ist.

15. Kraftfahrzeug nach Anspruch 1, **dadurch gekennzeichnet, dass** am Umlenkhebel (9) der Laufwagen (7) in einem Langloch (266) schwenkbar geführt angebracht ist, dass als erstes Verankerungsteil ein Arretierhebel (1326) schwenkbar am Laufwagen (7) vorgesehen ist, und dass als zweites Verankerungsteil eine Vertiefung oder Öffnung (1126) in der Seitenwand (2) vorgesehen ist, in die der Arretierhebel (1326) bei Erreichen der entsprechenden Öffnungsposition selbsttätig einfallend eine mechanische Kopplung bzw. Fixierung eingeht, womit am Ort des zweiten Verankerungsteils der weitere Fixpunkt für die Führung der Tür (1) gebildet ist.

## Claims

1. A motor vehicle comprising a sliding door guide, particularly in the van and commercial vehicle sector, with a carriage (7) and a rail (6), wherein the door (1) in the closed position is flush with the side panel (2) of the motor vehicle and in the open position projects laterally beyond the side panel (2), and is slidable essentially parallel to the side panel (2), **characterized in that** the door (1) is held by means of an upper, a lower and a central guide mechanism, the rail (6) is provided on the inner side (5) of the door (1) as a central guide, the carriage (7) is pivotally mounted on a reversing lever (9), said reversing lever (9) on the other hand is pivotally connected to a pillar (4) of the motor vehicle body, a first anchor (6, 13) is provided somewhat in half-open length in the side panel (2), a second anchor (11, 611, 711, 1125, 1126) is provided which with the first anchor (6, 13) automatically activates a mechanical coupling or fixation on reaching the corresponding opening position in which at the location of the second anchor (11, 611, 711, 1125, 1126) a further fixing point is formed for the door (1) guide.

2. A motor vehicle according to Claim 1, **characterized in that** a bracket (611) projecting from the side panel (2) is provided as a second anchor and a rail (6) provided on the inner side (5) of the door (1) serves as a first anchor, said rail, encompassing said bracket, forming, at the location of the projecting bracket (611), form-fit with said bracket, the other fixing point for the door (1) guide.

3. A motor vehicle according to Claim 1, **characterized in that** a roller (711) or a roller carriage comprising several rollers is provided as a second anchor which is firmly mounted on the side panel (2) or is retractably or pivotally mounted on said side panel and that the rail (6) provided on the inner side (5) of the door (1) serves as the first anchor which at the location where the roller (711) or roller carriage comprising several rollers, encompassing said roller(s), forms, form-fit with said roller(s), the other fixing point for the door (1) guide.

4. A motor vehicle according to Claim 1, **characterized in that** as a first anchor a coupling pin (11) retractable from the side panel (2), particularly with a thickened head is provided and that as a second anchor a roller carriage (13) or a single so-called dead roller is provided, which is arranged freely running in the rail (6), which upon reaching the corresponding opening position automatically engages with the coupling pin (11) in a mechanical coupling or fixation, whereby at the location of the coupling pin (11) the other fixing point for the door (1) guide is formed.

5. A motor vehicle according to Claim 3 or 4, **characterized in that** the roller (711) or the roller carriage comprising several rollers or the coupling pin (11) is retractable from the side panel (2) and can be driven back into the side panel (2) by means of a forced control, and that the forced control is activated by swinging around the reversing lever (9) from the closed into the swung-out position or opposite.

6. A motor vehicle according to Claim 4 or 5, **characterized in that** the coupling pin (11) is covered by means of a flap in the retracted position and that the flap can be brought from the covered position when the coupling pin (11) is projected.

7. A motor vehicle according to Claim 4 or 6, **characterized in that** the coupling pin (11) is provided with a cap (12), which on the one hand in retracted position closes flush with the side panel (2) particularly in a sealing manner and on the other hand in projected position is housed in a corresponding bulge of the rail (6) or of the roller (711), particularly in a noncontacting manner.

8. A motor vehicle according to one of the preceding claims, **characterized in that** the reversing lever (9) is spring-loaded and the spring-loading is applied by means of a spring, particularly by means of a torsional spring, which is relaxed when the door (1) is swung out and loaded when the door is swung in.

9. A motor vehicle according to one of the Claims 4 to 7, **characterized in that** for the forced control of the coupling pin (11) or of the roller (711) or of the roller carriage comprising several rollers, a rope (72) or a Bowden cable (82) or a push bar (102, 103), is provided which are directly or indirectly connected with the reversing lever (9, 79).

10. A motor vehicle according to one of the Claims 4 to 7, **characterized in that** for the forced control of the coupling pin (11) or of the roller (711) or of the roller carriage comprising several rollers, a lever-slotted link (112, 791, 122, 123) or an eccentric adjustment (151, 152) is provided which can be activated by means of the reversing lever (9).

11. A motor vehicle according to one of the Claims 4 to 7, **characterized in that** the forced control of the coupling pin (11) or the roller (711) or the roller carriage comprising several rollers is realized by means of a gear drive (141, 142, 143) between the reversing lever (9, 79) and the coupling pin (11) or roller (711).

12. A motor vehicle according to one of the Claims 4 to 7, **characterized in that** for the forced control of the coupling pin (11) or the roller (711) or the roller carriage comprising several rollers the said is pivotally located about a horizontal (131) or vertical (182) axis and the pivoting is initiated by an actuation cam (132, 183, 184) when the sliding door (1) moves over it.

13. A motor vehicle according to one of the Claims 4 to 7, **characterized in that** for the forced control of the coupling pin (11) or the roller (711) or the roller carriage comprising several rollers, a spring-loaded release lever (171) is provided on the outer side of the side panel (2), which controls the extension or retraction mechanism via a rocking lever (172) when passed over by the door (1).

14. A motor vehicle according to Claim 1, **characterized in that** the carriage (7) is pivotally mounted on the reversing lever (9) and that as a first anchor a stop lever (926) is pivotally mounted on the carriage (7) or that the reversing lever (9, 925) is provided with a perpendicularly projecting firm stop lever (926), and that as a second anchor a depression or opening (1125) is provided in the side panel (2), in which the stop lever (926) automatically falls into a mechanical coupling or fixation upon reaching the corresponding opening position, whereby the other fixing point for the door (1) guide is formed at the location of the second anchor.

15. A motor vehicle according to Claim 1, **characterized in that** the carriage (7) is mounted in an oblong hole (266) pivotally guided on the reversing lever (9) such that a stop lever (1326) is pivotally provided on the carriage (7) as a first anchor, and that as a second anchor a depression or opening (1126) is provided in the side panel (2) in which the stop lever (1326) automatically falls into a mechanical coupling or fixation upon reaching the corresponding opening position, whereby the other fixing point for the door (1) guide is formed at the location of the second anchor.

## Revendications

1. Véhicule automobile comprenant un guide de porte coulissante, notamment dans le domaine des vans et des véhicules utilitaires, avec chariot (7) et glissière (6), la porte (1), à l'état fermé, étant alignée avec la paroi latérale (2) du véhicule et, à l'état ouvert, dépassant latéralement sur la paroi latérale (2) et pouvant coulisser essentiellement de façon parallèle à la paroi latérale (2), **caractérisé en ce que** la porte (1) est tenue par un guidage supérieur, un guidage inférieur et un guidage médian, la glissière (6) est prévue comme guidage médian dans la face intérieure (5) de la porte (1), le chariot (7) est articulé sur un levier de renvoi (9) en pouvant pivoter, le levier de renvoi (9) de son côté est fixé de façon basculante à un montant (4) de la carrosserie, un premier élément d'ancrage (6, 13) est prévu, un deuxième élément d'ancrage (11, 611, 711, 1125, 1126) est prévu dans la paroi latérale (2) à peu près à la demi-longueur d'ouverture, lequel deuxième élément d'ancrage forme automatiquement un accouplement mécanique ou une fixation avec le premier élément d'ancrage (6, 13) lorsque la position d'ouverture correspondante est atteinte, grâce à quoi un point de fixation supplémentaire pour le guidage de la porte (1) est formé à l'endroit du deuxième élément d'ancrage (11, 611, 711, 1125, 1126).

2. Véhicule automobile selon la revendication 1, **caractérisé en ce qu'il est** prévu comme deuxième élément d'ancrage un chevalet (611) dépassant hors de la paroi latérale (2) et la glissière (6) prévue sur la face intérieure (5) de la porte (1) sert de premier élément d'ancrage, laquelle, à l'endroit du chevalet (611) dépassant, forme avec celui-ci en l'enserrant par assemblage de forme le point de fixation supplémentaire pour le guidage de la porte (1).

3. Véhicule automobile selon la revendication 1, **caractérisé en ce qu'**il est prévu comme deuxième élément d'ancrage un rouleau (711) ou un chariot roulant comprenant plusieurs rouleaux qui est disposé fixement sur la paroi latérale (2) ou en pouvant en être sorti ou en pouvant en dépasser par basculement, et **en ce que** la glissière (6) prévue sur la paroi intérieure (5) de la porte (1) sert de premier élément d'ancrage, laquelle, à l'endroit du rouleau (711) ou du chariot comprenant plusieurs rouleaux, forme avec celui-ci ou avec ceux-ci en le ou les enserrant par assemblage de forme le point de fixation supplémentaire pour le guidage de la porte (1).

4. Véhicule automobile selon la revendication 1, **caractérisé en ce qu'**il est prévu comme premier élément d'ancrage un doigt de capture (11) pouvant être sorti de la paroi latérale (2), notamment avec une partie frontale épaissie, et **en ce qu'**il est prévu comme deuxième élément d'ancrage un dispositif à rouleaux (13) ou un rouleau unique appelé rouleau mort qui est disposé librement mobile dans la glissière (6) lequel, lorsque la position d'ouverture correspondante est atteinte, forme automatiquement un accouplement mécanique ou une fixation avec le doigt de capture (11), grâce à quoi le point de fixation supplémentaire pour le guidage de la porte (1) est formé à l'endroit du doigt de capture (11).

5. Véhicule automobile selon la revendication 3 ou 4, **caractérisé en ce que** le rouleau (711) ou le chariot comprenant plusieurs rouleaux ou le doigt de capture (11) peut être sorti de la paroi latérale (2) et rentré à nouveau dans la paroi latérale (2) par une commande forcée, et **en ce que** la commande forcée est activée par le basculement du levier de renvoi (9) de la position fermée dans la position basculée ou inversement.

6. Véhicule automobile selon la revendication 4 ou 5, **caractérisé en ce que** le doigt de capture (11) en position rentrée est masqué par un couvercle, et **en ce que** le couvercle peut être sorti de la position de masquage lors de la sortie du doigt de capture (11).

7. Véhicule automobile selon la revendication 4 ou 6, **caractérisé en ce que** le doigt de capture (11) est muni d'un couvercle (12) qui d'une part en position rentrée ferme notamment de façon étanche la paroi latérale (2) et d'autre part en position sortie est reçu dans un évidement correspondant de la glissière (6) ou du rouleau (711), notamment sans contact.

8. Véhicule automobile selon l'une des revendications précédentes, **caractérisé en ce que** le levier de renvoi (9) est soumis à l'effet d'un ressort et que cet effet est appliqué par un ressort, notamment un ressort de torsion, qui est détendu lors de l'écartement de la porte (1) et qui est tendu lors de l'alignement.

9. Véhicule selon l'une des revendications 4 à 7, **caractérisé en ce que**, pour la commande forcée du doigt de capture (11) ou du rouleau (711) ou du chariot comprenant plusieurs rouleaux, il est prévu un fil (72) ou un câble (82) ou une bielle de poussée (102, 103) qui sont reliés directement ou indirectement au levier de renvoi (9, 79).

10. Véhicule automobile selon l'une des revendications 4 à 7, **caractérisé en ce que,** pour la commande forcée du doigt de capture (11) ou du rouleau (711) ou du chariot comprenant plusieurs rouleaux, il est prévu une liaison levier-coulisse (112, 791 ; 122, 123) ou un déplacement par excentrique (151, 152) qui peut être actionné par le levier de renvoi (9).

11. Véhicule automobile selon l'une des revendications 4 à 7 **caractérisé en ce que** la commande forcée du doigt de capture (11) ou du rouleau (711) ou du chariot comprenant plusieurs rouleaux est réalisée par un entraînement denté (141, 142, 143) entre le levier de renvoi (9, 79) et le doigt de capture (11) ou le rouleau (711).

12. Véhicule automobile selon l'une des revendications 4 à 7, **caractérisé en ce que,** pour la commande forcée du doigt de capture (11) ou du rouleau (711) ou du chariot comprenant plusieurs rouleaux, celui-ci est disposé pivotant autour d'un axe horizontal (131) ou vertical (182) et le pivotement est introduit par une came d'actionnement (132 ; 183, 184) lorsque la porte coulissante (1) passe dessus.

13. Véhicule automobile selon l'une des revendications 4 à 7, **caractérisé en ce que,** pour la commande forcée du doigt de capture (11) ou du rouleau (711) ou du chariot comprenant plusieurs rouleaux, il est prévu un levier de déclenchement (171) à ressort sur la faxe extérieur de la paroi latérale (2) qui commande la sortie ou l'entrée par l'intermédiaire d'un levier de basculement (172) lorsque la porte (1) passe dessus.

14. Véhicule automobile selon la revendication 1, **caractérisé en ce que** le chariot à rouleaux (7) est pivotant sur le levier de renvoi (9) et **en ce qu'**un levier d'arrêt (926) est disposé pivotant sur le chariot à rouleau (7) comme premier élément d'ancrage ou **en ce que** le levier de renvoi (9, 925) est muni d'un levier d'arrêt (926) fixe écarté perpendiculairement, et **en ce qu'**il est prévu comme deuxième élément d'ancrage un enfoncement ou une ouverture (1125) dans la paroi latérale (2) dans lequel le levier d'arrêt (1326) forme un accouplement mécanique ou une fixation en tombant automatiquement lorsque la position d'ouverture correspondante est atteinte grâce à quoi le point de fixation supplémentaire pour le guidage de la porte (1) est formé à l'endroit du deuxième élément d'ancrage.

15. Véhicule automobile selon la revendication 1, **caractérisé en ce que** le chariot à rouleaux (7) est disposé pivotant sur le levier de renvoi (9) dans un trou oblong (266), **en ce qu'**un levier d'arrêt (1326) est prévu pivotant sur le chariot à rouleau (7) comme premier élément d'ancrage, et **en ce qu'**il est prévu comme deuxième élément d'ancrage un enfoncement ou une ouverture (1126) dans la paroi latérale (2) dans lequel le levier d'arrêt (1326) forme un accouplement mécanique ou une fixation en tombant automatiquement lorsque la position d'ouverture correspondante est atteinte grâce à quoi le point de fixation supplémentaire pour le guidage de la porte (1) est formé à l'endroit du deuxième élément d'ancrage.
